# EUROPEAN PATENT APPLICATION

(11) **EP 4 674 587 A1**
(43) Date of publication of application: **07.01.2026**
(21) Application number: 24185622.8
(22) Date of filing: 01.07.2024
(51) Int. Cl.: B29C 45/00, B29C 45/14, B29C 69/00, B29C 70/32, B29C 70/44

(54) **COMPOSITE POLE AND PROCESS FOR PRODUCING SAME**

(71) Applicant: Paltech, Clara , Co. Offaly R35 XR57 (IE)
(72) Inventor: Doyle, Adrian, Clara, R35 XR57 (IE); Feerick, Patrick, Clara, R35 XR57 (IE)
(74) Representative: Connor, Marco Tom

(57) **Abstract**

The invention relates to a composite pole (1) for structural applications defining a tubular structure comprising a bore (4) and extending along a Z-axis, wherein
• a length of the composite pole, L = 3 to 20 m,
• an aspect ratio of the length (L) to the bottom hydraulic diameter (D3b), L / D3b = 30 to 40 and
• a ratio of the top hydraulic diameter (D3t) to the bottom hydraulic diameter (D3b), D3t / D3b = 0.5 to 1.0, preferably, 0.7 to 0.9),

**Characterized in that,** the composite pole is formed by a wall comprising an inner tubular layer (2) and an outer tubular layer (3), wherein
• the inner tubular layer (2) defines the bore (4) and is made of a thermoplastic polymer matrix (2m) reinforced by continuous glass fibres and
• the outer tubular layer (3) is applied directly over the inner tubular layer (2), and is made of thermoplastic polymer waste material (3m) preferably admixed with chopped glass fibres.

## Description

### FIELD OF THE INVENTION

The invention relates to the field of composite poles for structural applications including holding commodities such as wires, signs, or streetlamps along streets, roads and across the countryside. Not only the composite poles of the present invention fulfil the mechanical and ageing requirements of the applications they are designed for, but they also comprise a large amount of recycled thermoplastic material which is currently deemed unusable and generally discarded as waste material.

### BACKGROUND OF THE INVENTION

Polymeric materials have been used extensively for decades. Polymers waste remains, however, a problem because most polymers do not biodegrade. Thermoplastic polymers have the potential of being recycled since they can be melted by heating, re-shaped in the liquid form and cooled to solidify, generally by crystallisation. Despite this property and despite the research and innovations made in the field of recycling thermoplastic materials, it is estimated that less than 10% of thermoplastic polymers are recycled. The rest is either incinerated or stored in landfills, or dumped in the oceans, forming the so-called Great Pacific Plastic Patch or the Plastic Island.

Although recycling plastic products is only a portion of the solution to the problem of plastic waste, it still has a great potential for substantially reducing the amount of plastic waste. The thermoplastic material that is currently being recycled is generally well isolated by types of polymers, thus allowing to maintain a significant portion of their original properties. The unrecycled fraction of polymers has, by contrast, less well defined compositions and can only be used in less demanding applications as their properties are significantly lower than the ones of the original individual polymers. Furthermore, in view of the large volumes of polymer waste to be recycled, only large volume applications can have a significant impact on reducing the volumes of polymer waste.

Poles used for holding commodities such as electric or telephone wires, signs, or streetlamps along streets, roads and across the countryside have specific requirements. They must have good flexural properties with a high height to diameter aspect ratio for heights of at least 3 m to up to 15 m or, for some applications, up to 20 m. They must also withstand impacts (e.g., from a car) and severe atmospheric conditions, like sun, wind, rain, hail, high temperature variations. To date, such poles have traditionally been made of wood. Despite the high quality (and expensive) wood used to produce the wood poles to resist the severe atmospheric conditions they are exposed to, the service life of such wood poles is limited to a couple of decades. Wood poles generally have to be replaced for strength degradation due to groundline decay. Concrete poles are used for more demanding applications. They are stronger and have a longer service life than wood poles, but they have a substantial COz-footprint.

Composite poles made of fibre reinforced polymers have been proposed to replace wood poles. For example, US7829164 describes a composite pole comprising an inner layer made of a short fibre reinforced thermoplastic composite material and an outer layer of a thermoplastic material. The two layers are coextruded to form the composite pole. The use of short glass fibres (GF) only suggests moderate mechanical properties limiting the use of such poles to specific low requirements applications.

US4172175 describes a GF-reinforced thermoset composite pole comprising an inner layer made of wrapped GF-reinforced thermoset tapes, an intermediate layer with 0°-UD GF-reinforced thermoset, and an outer layer made of wrapped GF-reinforced thermoset tapes. This pole is reinforced with continuous glass fibres aligned along well defined directions, suggesting high mechanical properties. The matrix used is, however, a thermoset resin, which excludes the use of recycled materials and reduces substantially the recyclability of the composite pole.

CN116442554A describe a two-layer composite pole with enhanced adhesion between the inner and outer layers. The pole is produced by applying UD fibres along the pole axis soaked with thermosetting resin. Wrapping a release layer over the uncured resin. Allowing the resin of the inner layer to cure and removing the release layer, leaving a texture on the surface of the cured fibre reinforced inner layer. An outer layer is formed by wrapping UD fibres soaked in a resin and allowing the resin of the outer layerto cure. Again, thermoset resins cannot be recycled.

US20240165908 describes a composite cross arm structure comprising an inner core comprising foam and an outer shell surrounding the inner core and comprising a mixture of fibre reinforcement and a thermoset resin. The resin is resistant to ultraviolet (UV) radiation.

Pipelines have quite different requirements from poles. Pipelines must be impervious to the fluid flowing in the bore thereof and are generally placed underground, and therefore exposed to compression stresses rather than flexural stresses as poles are. Like with poles, in the field of pipelines, composites have been used to replace concrete. For example, US20150053293 describes a complex multilayer pipeline comprising a fluid tight ply defining a bore, an inner fibre reinforced ply covered by a first intermediate ply in thermoplastic, and an outer fibre reinforced ply is applied on top of the first intermediate ply. At least one of the inner and outer fibre reinforced plies comprises a fibre reinforced layer and a thermoplastic reinforcement free layer.

There remains a need for providing applications allowing the use of substantial amounts of thermoplastic waste materials. There also remains a need for alternative composite poles fulfilling the specific requirements of such poles. The present invention meets both needs by providing a composite pole comprising substantial amounts of thermoplastic waste material. These and other advantages are described in continuation.

### SUMMARY OF THE INVENTION

The present invention concerns a composite pole for structural applications including holding commodities along streets, roads and across countryside wherein the composite pole defines a tubular structure comprising a bore and extends from a bottom end of bottom outer hydraulic diameter D3b to a top end of top hydraulic outer diameter D3t over a length L measured along a Z-axis, pole geometry is defined as follows,
- a length L of the composite pole is comprised between 3.0 m and 20.0 m, preferably between 5.0 m and 15.0 m,
- an aspect ratio of the length L to the bottom hydraulic diameter D3b is comprised between 30 and 40, preferably between 35 and 38 (i.e., L / D3b = 30 to 40, preferably 35 to 38), and
- a ratio of the top hydraulic diameter D3t to the bottom hydraulic diameter D3b) is comprised between 0.5 and 1.0, preferably between 0.7 and 0.9 (i.e., D3t / D3b = 0.5 to 1.0, preferably, 0.7 to 0.9),

The composite pole is formed by a wall of total thickness t1 comprising an inner tubular layer and an outer tubular layer, wherein
   - the inner tubular layer defines the bore, has an inner thickness, and is made of a thermoplastic polymer matrix reinforced by continuous glass fibres including at least 50 wt.%, preferably at least 70 wt.% of the total weight of the continuous glass fibres aligned at 0° along the Z-axis, and
   - the outer tubular layer is applied directly over the inner tubular layer, defines an outer surface of the composite pole, has an outer thickness t3, and is made of thermoplastic polymer waste material preferably admixed with chopped glass fibres.
The outer thickness t3 is comprised between 65 and 85%, preferably 70 to 80% of the total thickness t1 (i.e., t3 / t1 = 65 to 85%, preferably 70 to 80%), wherein t1 = t2 + t3, and a ratio of the total thickness t1 to the bottom hydraulic diameter D3b is comprised between 8 and 15%, preferably between 10 and 13%. The hydraulic diameter (Dh) of a closed geometric shape is a ratio of four times an area (A) to a perimeter (P) of the area of the shape (i.e., Dh = 4 A / P),

The thermoplastic polymer matrix of the inner tubular layer can be selected among, polyethylene terephthalate (PET), polyethylene terephthalate glycol (PETG), polyamide (PA), including polyamide 6, 66, 12 (PA6, PA66, PA12), and polyolefin, preferably polyethylene (PE) and polypropylene (PP).

The inner tubular layer can comprise for example at least 50 wt.% glass fibres over the total weight of the inner tubular layer, preferably at least 55 wt.%. At least 5 wt.%, preferably at least 10 wt.%, more preferably at least 20 wt.% of the glass fibres of the inner tubular layer can be oriented at ±45° with respect to the Z-axis.

The thermoplastic polymer waste material of the outer tubular layer can comprise at least 70 wt.% of polyolefins of different grades, including different grades of polyethylene and of polypropylene. The thermoplastic polymer waste material can be admixed with chopped glass fibres of length comprised between 2.0 mm and 6.0 mm, preferably between 3.0 and 4.0 mm, and in an amount comprised between 10 and 20

The present invention also concerns a process for producing a composite pole according to any one of the preceding claims, comprising the following steps,
- providing an inner mould defining a geometry of the bore, and an outer mould defining a geometry of an outer surface of the wall,
- applying a precursor of the inner tubular layer by wrapping around the inner mould either,
   ∘ a succession of unidirectional continuous glass fibre plies and foils of thermoplastic polymer matrix configured to form the inner tubular layer upon application of heat to melt the foils of thermoplastic polymer matrix and pressure to drive an impregnation of the continuous glass fibre plies, or
   ∘ a succession of prepregs formed by continuous glass fibre plies preimpregnated by the thermoplastic polymer matrix) and configured to form the inner tubular layer upon application of heat to melt the thermoplastic polymer matrix and pressure to drive an consolidation of the prepregs,
- Inserting the inner mould (12) with the precursor into the outer mould (13), and connecting an extruder to one end of the outer mould, facing a cavity defined between the outer mould and the precursor,
- heating the inner and outer moulds to a process temperature configured to melt the thermoplastic polymer matrix,
- extruding the thermoplastic polymer waste material, preferably admixed with chopped glass fibres, into the cavity until the cavity is filled, to form the outer tubular layer and, at a same time, raise a pressure in the cavity to drive the impregnation or consolidation of the continuous glass fibre plies by the molten thermoplastic matrix,
- cooling the inner and outer moulds to below a solidification temperature of both thermoplastic polymer matrix and thermoplastic polymer waste material, and demould the thus formed composite pole, by removing the compositie pole from both inner and outer moulds.

Demoulding of the pole can start with pushing the inner mould out of the bore as follows.
- removing a top cap of the outer mould to open a top end of the inner mould to expose the top end of the composite pole,
- removing a bottom cap of the outer mould to form a partial opening at a bottom end of the outer mould at a level of the bottom end of the composite pole, wherein the partial opening has a hydraulic diameter comprised between a bottom bore hydraulic diameter D4b and the bottom outer hydraulic diameter D3b and is configured to allow free passage of the inner mould through the partial opening, but retaining the composite pole within the outer mould,
- pushing the top end of the inner mould out of the bore with a pusher,
- removing composite pole from the outer mould either,
   ∘ by fully opening the outer mould at the level of the bottom end of the composite pole to expose the bottom end of the composite pole, and pushing the top end of the composite pole with the pusher to push the composite pole out of the outer mould, or
   ∘ by opening the outer mould, to expose the composite pole and allow removal thereof.

An anti-adhesion sheet of low surface energy material having a melting temperature higher than the process temperature, preferably a fluorinated polymer material can be wrapped around the inner mould prior to applying the first continuous glass fibre ply or prepreg, to facilitate pushing the inner mould out of the bore of the composite pole.

The pressure in the cavity can rise to at least 1 bar, preferably at least 2.5 bar, more preferably at least 3 bar to drive the impregnation and / or consolidation of the glass fibre by the thermoplastic polymer matrix.

### SHORT DESCRIPTION OF THE DRAWINGS

These and further aspects of the invention will be explained in greater detail by way of example and with reference to the accompanying drawings in which,
**Figure 1** shows cross-sectional views of a pole according to the present invention.
**Figure 2a** shows a perspective cut view of the pole of the present invention.
**Figures 2b & 2c** show (2b) an exploded perspective cut view and (2c) an assembled perspective cut view of a mould configured to produce the pole of the present invention, showing inner mould, outer mould, top cap with extruder coupling, bottom cap, and partial bottom cap.
**Figure 3a** shows precursor plies constituted of a succession of unidirectional continuous glass fibre reinforced prepregs configured to form the inner tubular layer.
**Figure 3b** shows precursor plies constituted of a succession of unidirectional and woven and / or stitched continuous glass fibre reinforced towpreg fabrics configured to form the inner tubular layer.
**Figure 3c** shows precursor plies constituted of a succession of unidirectional continuous glass fibre plies and foils of thermoplastic polymer matrix configured to form the inner tubular layer.
**Figure 3d** shows a perspective cut view of a composite pole section according to the present invention.
**Figure 3e** shows the inner tubular layer made of continuous GF reinforced polymer.
**Figure 3f** shows the outer tubular layer made of thermoplastic polymer, preferably reinforced with chopped glass fibres.
**Figures 4a to 4i** show various steps of one embodiment of the process for producing the pole of the present invention.
**Figures 5a to 5g** show various steps of an alternative embodiment of the process for producing the pole of the present invention.
**Figure 6a** shows a temperature profile of the inner layer measured as a function of time.
**Figure 6b** shows a pressure profile generated in the mould cavity during extrusion of the outer layer with the same time scale as in Figure 5a.

### DETAILED DESCRIPTION OF THE INVENTION

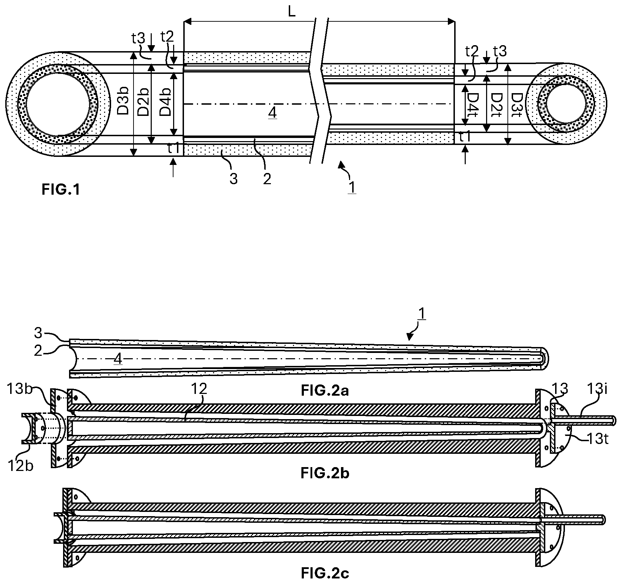

As shown in Figure 1, 2a, 4i, and 5g, the composite pole (1) of the present invention defines a tubular structure comprising a bore (4) and extends from a bottom end of bottom outer hydraulic diameter (D3b) to a top end of top hydraulic outer diameter (D3t) over a length L measured along a Z-axis. The hydraulic diameter (Dh) of a closed geometric shape is a ratio of four times an area (A) to a perimeter (P) of the area of the shape (i.e., Dh = 4 A / P) and is useful to define the dimensions of a not necessarily circular cross-section.

The composite pole of the present invention is suitable for structural applications including holding commodities such as electric wires, streetlights, traffic signs or other signs which are commonly found along streets, roads and across the countryside. To this purpose, the composite post of the present invention has well defined dimensions. The composite pole has a length (L) comprised between 3.0 m and 20.0 m, preferably between 5.0 m and 15.0 m, more preferably between 8.0 and 12.0 m. An aspect ratio of the length (L) to the bottom hydraulic diameter (D3b) is comprised between 30 and 40, preferably between 35 and 38 (i.e., L / D3b = 30 to 40, preferably 35 to 38). A ratio of the top hydraulic diameter (D3t) to the bottom hydraulic diameter (D3b) is comprised between 0.5 and 1.0, preferably between 0.7 and 0.9 (i.e., D3t / D3b = 0.5 to 1.0, preferably, 0.7 to 0.9), An aspect ratio smaller than 1 defines a trunco-conical pole and an aspect ratio of 1 defines a cylindrical pole (cones and cylinders being construed herein according to their geometrical definition as including bases of any geometry).

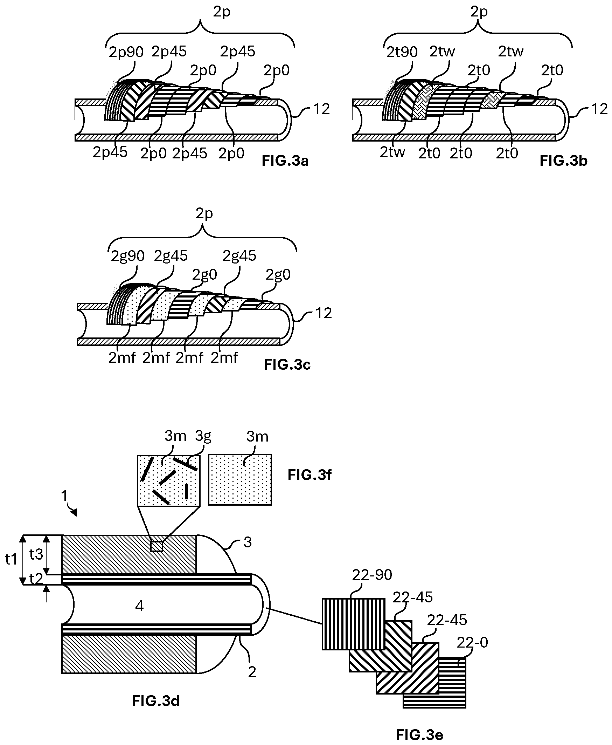

As shown in Figures 1 and 3d, the composite pole (1) is a two-layer structure formed by a wall of total thickness (t1) comprising an inner tubular layer (2) and an outer tubular layer (3). A ratio of the total thickness (t1) to the bottom hydraulic diameter (D3b) is comprised between 8 and 15%, preferably between 10 and 13%.

The inner tubular layer (2) defines the bore (4) of the hollow pole. The inner tubular layer (2) has an inner thickness (t2) and is made of a thermoplastic polymer matrix (2m) reinforced by continuous glass fibres. At least 50 wt.%, preferably at least 70 wt.% of the total weight of the continuous glass fibres of the inner tubular layer (2) are aligned at 0° along the Z-axis.

The outer tubular layer (3) is applied directly over the inner tubular layer (2) and defines an outer surface of the composite pole (1). The outer tubular layer (3) has an outer thickness (t3) comprised between 65 and 85%, preferably 70 to 89% of the total thickness (t1) (i.e., t3 / t1 = 65 to 85%, preferably 70 to 80%), wherein t1 = t2 + t3. The outer tubular layer (3) is made of thermoplastic polymer waste material (3m) preferably, albeit not necessarily, admixed with chopped glass fibres.

### THE INNER TUBULAR LAYER (2)

The inner tubular layer (2) is a continuous glass fibre (GF) reinforced thermoplastic matrix composite (2m) as shown e.g., in Figures 3a to 3c and 3e. The thermoplastic polymer matrix (2m) of the inner tubular layer (2) can be selected among, polyethylene terephthalate (PET), polyethylene terephthalate glycol (PETG), polyamide (PA), including polyamide 6, 66, or 12 (PA6, PA66, PA12), and polyolefin, preferably polyethylene (PE) or polypropylene (PP). The inner layer (2) substantially contributes to the stiffness and strength of the composite pole (1). Impregnation of the fibres by the thermoplastic polymer matrix (2m) melt and good adhesion thereof with the glass fibres are two essential conditions to yield the desired mechanical properties required by the composite pole (1). The thermoplastic polymer matrix (2m) must therefore be of good quality. Recycled thermoplastic polymer matrix (2m) can be used, but it must be well separated (i.e., composed of a single polymer type) and maintain a substantial amount of its original properties.

The composite forming the inner tubular layer (2) can comprise at least 50 wt.% glass fibres over the total weight of the inner tubular layer, preferably at least 55 wt.%, more preferably at least 60 wt.%. At least 10 wt.%, preferably at least 20 wt.%, preferably at least 50 wt.%, more preferably at least 70 wt.% of the glass fibres (2g0) of the inner tubular layer (2) are oriented at 0° with respect to the Z-axis. It is preferred that the inner tubular layer (2) also comprises GF (2g45) oriented at ±45° with respect to the Z-axis. For example, at least 5 wt.%, preferably at least 10 wt.%, more preferably at least 20 wt.% of the GF of the innertubular layer (2) are oriented at ±45° relative to the Z-axis. Finally, it is preferred that the inner tubular layer (2) also comprises GF (2g90) oriented at 90°relative to the Z-axis. For example, at least 1 wt.%, preferably at least 3 wt.%, more preferably at least 10 wt.% of the GF of the inner tubular layer (2) are oriented at 90° relative to the Z-axis. When stacking plies with fibres in different orientations, care must be taken to prevent formation of excess internal stresses upon crystallisation of the thermoplastic matrix, which could lead to warpage of the pole with time. The skilled person is well equipped to optimise the orientation of the different plies to avoid warpage.

The inner tubular layer (2) is formed by impregnating or consolidating a precursor (2p) comprising the glass fibres and the thermoplastic matrix (2m) in different forms. For example, as shown in Figure 3a, the precursor can be prepregs (2p0, 2p45, 2p90) made of plies of UD-glass fibres preimpregnated with a thermoplastic matrix (2m), which is solid at room temperature. The prepregs can be cut to obtain a desired geometry and stacked over an inner mould in the form of a mandrel (12) as illustrated in Figure 3a, according to a predefined sequence of fibre orientations. Alternatively, or in combination with prepregs, the inner tubular layer (2) can be formed of towpregs. Towpregs are bundles of glass fibres containing the thermoplastic matrix (2m) in the form of polymer powder or polymer fibres to form powder impregnated towpregs or commingled towpregs. Towpreg fabrics (2t0, 2t90, 2tw) are manufactured with the towpregs to form plies. Each ply can have fibres oriented along two perpendicular directions by weaving the towpregs (cf. 2tw in Figure 3b), or the fabrics can have unidirectional fibres along the warp direction, held in place by few tows of glass fibres or polymer fibres in the weft direction (cf. 2t0, 2t90 in Figure 3b). As shown in Figure 3b, the towpreg fabrics can be wrapped around a mandrel forming the inner mould (12). As shown in Figure 3c, the precursor (2p) can also be formed by sheet stacking wherein UD-glass fibre plies (2g0, 2g45, 2g90) and thermoplastic films (2mf) are stacked alternatively.

By wrapping different plies of the precursor (2p) over a mandrel forming the inner mould (12) and applying heat to melt the thermoplastic matrix (2m) and pressure, the glass fibres in the towpreg fabrics and in the sheet stacking can be impregnated and the precursor plies consolidated to form the inner layer (2) made of the matrix - GF composite layers (22-0, 22- 45, 22- 90) as illustrated in Figure 3e.

The fibre reinforced inner layer (2) confers the pole the required mechanical properties in terms of flexural stiffness and resistance.

### THE OUTER TUBULAR LAYER (3)

The outer tubular layer (3) is applied directly over the inner tubular layer (2) and defines the outer surface of the composite pole (1). The outer tubular layer (3) is made of thermoplastic polymer waste material (3m). For example, the thermoplastic polymer waste material (3m) of the outer tubular layer (3) can comprise at least 70 wt.% of polyolefins of different grades, including different grades of polyethylene and of polypropylene.

The outer tubular layer (3) has an outer thickness (t3). The total wall thickness is the sum of the thicknesses (t2, t3) of the inner and outer tubular layers (2, 3) (i.e., t1 = t2 + t3). A thickness ratio (t3 / t1) of the thickness (t3) of the outer tubular layer (3) to the total wall thickness (t1) of the pole wall can be comprised between 65 and 85% (i.e., t3 / t1 = 65 to 85%), preferably 70 to 80% of the total thickness (t1) (i.e., t3 / t1 = 70 to 80%). This means that 65 to 85% of the volume of the pole materials is made of thermoplastic waste material (3m), which makes the composite poles of the present invention an application having a substantial potential of re-using material which to date was destined to incineration or landfill. A thickness ratio (t3 / t2) of the outer tubular layer (3) to the inner tubular layer (2) can be expressed as a function of the ratio (t3 / t1) defined supra as, t3 / t2 = (t3 / t1) / (1 - (t3 / t1)). Considering the values of the ratio (t3 / t1) defined supra, the ratio t3 / t2 can be comprised between 1.6 and 5.7, preferably between 2.3 and 4.

The outer tubular layer (3) has the function of protecting the valuable inner tubular layer (2) made of advanced glass fibre reinforced composite material. The outer tubular layer (3) can protect the inner tubular layer (2) from abrasion, erosion, and even impacts from a cyclist or a motor car. It also protects the inner tubular layer (2) from UV exposure. To these effects, additives can be added to the thermoplastic waste material (3m).

For example, the thermoplastic polymer waste material (3m) can be admixed with chopped glass fibres to increase the mechanical properties of the outer tubular layer (3) (cf. Figures 3f, 4d, and 5c). The chopped glass fibres can have a length comprised between 2.0 mm and 6.0 mm, preferably between 3.0 and 4.0 mm, and can be present in an amount comprised between 10 and 20 wt.%, preferably between 12 and 16 wt.% relative to the total weight of the outer tubular layer (3).

To increase the resistance to impact, rubber particles can be added to the waste material. To protect it from exposure to the sun, a UV stabiliser can be added to the thermoplastic waste material (3m). Since the thermoplastic waste material (3m) is a mixture of different thermoplastic polymers of different origins and colours, the colour of the composite pole can vary from pole to pole, or even from one portion of the composite pole to another. For this reason, a colorant can be added to the thermoplastic waste material (3m) to give the outer tubular layer defining the outer surface of the composite pole a homogeneous and repeatable colour and aspect in general.

### THE COMPOSITE POLE

The composite pole illustrated e.g., in Figures 1 and 2a, is dimensioned for the specific application it is designed for. Typically, road signs can be held by poles having a height of 3 to 10 m. Streetlights, electric wires, traffic lights, or surveillance cameras can be supported by taller posts of height up to 20 m, e.g., light posts along motorways. The composite pole of the present invention can therefore have a height (L) comprised between 3 and 20 m, preferably between 5 and 15 m, more preferably between 8 and 12 m.

The composite pole (1) preferably has a circular cross-section, but it can have other cross-sections, such as elliptic, or polygonal, and the like. The geometry of the cross-section of the pole is not limited by the process for producing it and can be freely chosen. For this reason, the dimensions of the pole cross-section are defined in terms of the hydraulic diameter, Dh = 4 A / P, wherein A and P are the area and perimeter of the cross-section. For a circular cross section, the hydraulic diameter (Dh) is equal to the diameter (D) of the circle (Dh = 4A / P = 4 (*π*D² / 4) / *π*D = D). The composite pole (1) is preferably trunco-conical, with a ratio of the top hydraulic diameter (D3t) to the bottom hydraulic diameter (D3b) smaller than unity (i.e., D3t / D3b < 1) or can be cylindrical with a ratio D3t / D3b = 1. The ratio D3t / D3b can therefore be comprised between 0.5 and 1.0, preferably between 0.7 and 0.9 (i.e., D3t / D3b = 0.5 to 1.0, preferably, 0.7 to 0.9). The terms conical and cylindrical are used herein with their broad definition, not restricted to circular bases. A conical shape is formed by a set of lines connecting a common point, the apex, to all the points on a base that is in a plane that does not contain the apex. A cylindrical shape is formed by a set of parallel lines connecting all the points of two bases separated from one another. If the two bases are parallel, they must be identical.

The bottom hydraulic diameter (D3b) can vary between 10 cm and 70 cm depending on the application and on the height (L) of the composite pole. Generally, the aspect ratio (L / D3b) of the length (L) to the bottom hydraulic diameter (D3b) is comprised between 30 and 40. In some applications, a short pole may be exposed to severe mechanical stresses and may require a lower aspect ratio (L / D3b), but most applications can be satisfied with an aspect ratio (L / D3b) of 30 to 40.

For cylindrical poles, the top hydraulic diameter (D3t) is equal to the bottom hydraulic diameter (D3b) (i.e., D3t = D3b ⇔ cylindrical pole). For trunco-conical poles, the ratio, D3t / D3b < 1. Generally, the top hydraulic diameter (D3t) can be comprised between 8 cm and 70 cm, preferably between 10 and 65 cm, depending also on the height (L) of the pole.

The total wall thickness (t1) can vary between 2 cm for short poles (e.g., L < 5 m) to 15 cm for taller poles of up to 20 m. The thicknesses (t2, t3) of the inner and outer tubular layers (2, 3) can be obtained from the total wall thickness (t1) with the values of the ratios (t3 / t1) and (t3 / t2) discussed supra. For example, the outer tubular layer (3) can have a thickness (t3) comprised between 1.5 to 10 cm depending on the value of the total wall thickness (t1). The inner tubular layer (2) can have a thickness (t2) comprised between 0.7 cm to 2.5 cm.

### PROCESS FOR PRODUCING THE COMPOSITE POLE (1)

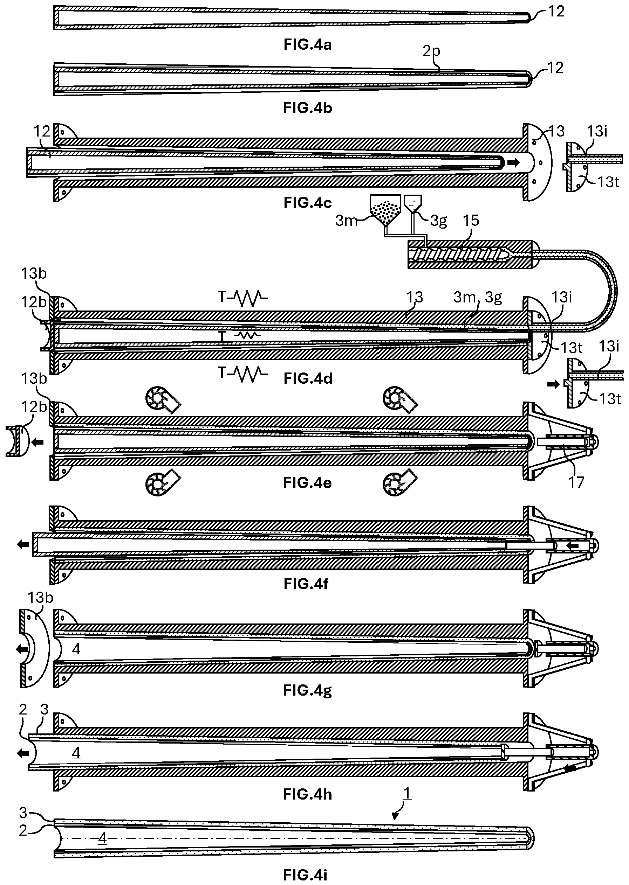

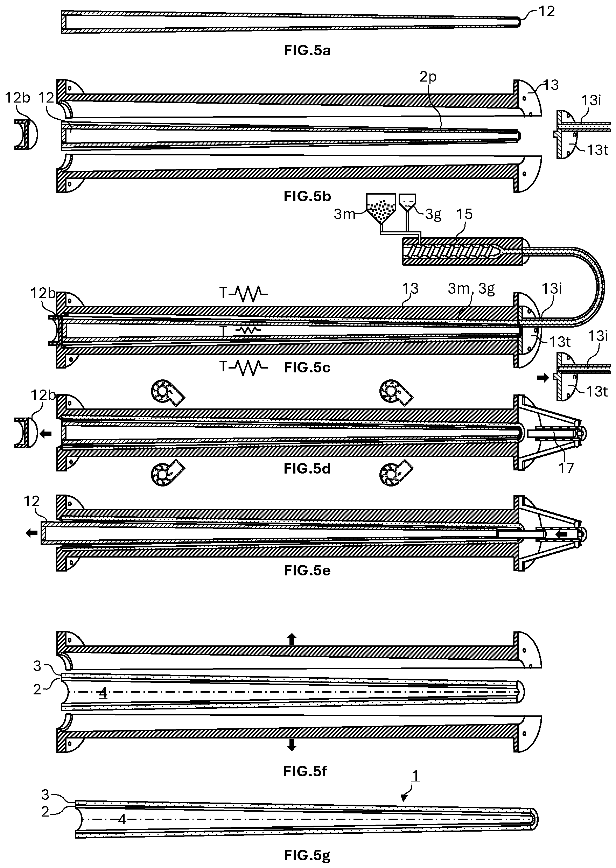

The present invention also concerns a process for producing the composite pole (1) discussed supra. Two embodiments of the process are illustrated in Figures 4a to 4i and 5a to 5g. The process comprises the following steps.

### Mould

A mould is provided, comprising an inner mould (12) defining a geometry of the bore (4) and an outer mould (13) defining a geometry of an outer surface of the wall. As shown in Figures 2b, 2c, 4a and 5a, the inner mould (12) is in the form of an elongated mandrel. In the embodiment illustrated in Figures 4b to 4h, the outer mould (13) is in the form of a monolithic hollow tube. In the embodiment illustrated in Figures 5b to 5f, the outer mould (13) is formed by separatable shells which can be coupled to form a hollow tube. In Figure 5b to 5f, two half shells are illustrated. It is clear that any combination of two or more shells can be envisaged. For trunco-conical composite poles defined by a ratio D3t / D3b < 1, it is preferred that the outer mould (13) is formed of separatable shells as in Figure 5 to facilitate demoulding.

### Preparation of the inner tubular layer (2)

As illustrated in Figures 3a to 3c, and 4b the precursor (2p) of the inner tubular layer is applied onto the inner mould (12) by wrapping around the inner mould (12) various layers of the precursor (2p) with the glass fibres aligned along a predefined pattern. In one embodiment illustrated in Figure 3c, the precursor (2p) is a stack of unidirectional continuous glass fibre plies (2g0, 2g45, 2g90) and of foils (or films) of thermoplastic polymer matrix (2m). The glass fibre plies are oriented such as to obtain the predefined glass fibre orientation pattern. At least 50 wt.% of the glass fibres relative to the total weight of glass fibres in the inner tubular layer (2) are oriented parallel to the Z-axis, i.e., at 0°. To facilitate impregnation of the glass fibres by the thermoplastic polymer matrix (2m) upon heating to melt the matrix and pressure to drive the impregnation, it is preferred to alternate one ply of glass fibres and one foil of thermoplastic polymer matrix (2m). Depending on the viscosity of the thermoplastic polymer matrix (2m) melt, a sequence of two or three glass fibre plies and one thermoplastic polymer matrix (2m) foil is also possible. The stacking sequence and thicknesses of the glass fibre plies and matrix foils can be controlled to ensure that the inner tubular layer (2) be composed of at least 50 wt.% glass fibres over the total weight of the inner tubular layer, preferably at least 55 wt.% or at least 60 wt.%.

In an alternative embodiment illustrated in Figure 3a, the precursor (2p) can comprise prepregs (2p0, 2p45, 2p90) formed by continuous glass fibre plies preimpregnated by the thermoplastic polymer matrix (2m). A succession of such prepregs can be stacked over the mandrel forming the inner mould (12) with the glass fibres oriented according to a predefined pattern. The glass fibres are already impregnated by the thermoplastic polymer matrix (2m). Application of heat and pressure ensures that the prepregs consolidate, i.e., the different prepreg plies coalesce and form the inner tubular layer (2).

In yet an alternative embodiment, illustrated in Figure 3b, the precursor (2p) can comprise fabrics of towpregs (2t0, 2t90, 2tw). As discussed supra, the fabrics can be formed of woven and / or stitched towpregs (2tw) with glass fibres oriented along two perpendicular directions (warp and weft) or can comprise UD towpregs in the warp direction, held in place by few threads in the weft direction. Again, the towpreg fabrics are laid according to the predefined orientation pattern. Application of heat and pressure melts the thermoplastic polymer matrix (2m) and drives the impregnation of the glass fibres. Because the thermoplastic polymer matrix (2m) is already intimately mixed with the glass fibres in the towpregs, the flowpath to fully impregnate the glass fibres is very short, allowing fast and good impregnation.

The precursor (2p) layers can be applied manually or wrapped with a dispenser rotating about the Z-axis while translating along the Z-axis. Layers of precursor (2p) can be held in place with threads wound around the precursor (2p) at an angle comprised between 45° and 90° relative to the Z-axis. The threads can be glass fibres or thermoplastic polymer matrix (2m). Once the mandrel forming the inner mould is wrapped with all the desired layers of precursor (2p), the inner mould is inserted into the outer mould (13) as illustrated in Figures 4c and 5b. As visible in Figures 4c and 5c, an annular cavity is left between an outer surface of the precursor (2p) and an inner surface of the outer mould (13). This cavity is configured to form the outer layer (3) as explained below.

### Forming the outer tubular layer (3) and impregnating and consolidating the inner tubular layer (2)

As shown in Figures 4d and 5c, an extruder (15) is connected to one end of the outer mould (13) facing the cavity defined between the outer mould (13) and the precursor. As illustrated in Figures 2b, 4c, 4d, 5b, and 5c, the extruder (15) can be coupled to an extruder coupling (13i) attached to a top cap (13t) closing the cavity of the mould at the level of the top end of the composite pole (1). The inner and outer moulds (12, 13) are heated to a process temperature configured to melt the thermoplastic polymer matrix (2m). Heating can be applied by inserting the mould into an oven. Alternatively, the inner and outer moulds can be provided with heating means. For example, a fluid jacket can surround the outer mould and an inner serpentine can extend inside the mandrel forming the inner mould (12) configured to receive a heated fluid, such as an oil. Alternatively, the inner and outer moulds (12, 13) can be provided with electrical heating resistances. Regardless of how the inner and outer moulds are heated, the objective is to melt the thermoplastic polymer matrix (2m) of the precursor (2p). Pressure is required to drive impregnation of the glass fibres and consolidation of the different plies by the thus melted thermoplastic polymer matrix (2m). The temperature of the mould depends on the melting temperature of the thermoplastic polymer matrix (2m) used and the desired viscosity of the polymer melt which, as explained supra, is preferably one of polyethylene terephthalate (PET), polyethylene terephthalate glycol (PETG), polyamide (PA), including polyamide 6, 66, or 12 (PA6, PA66, PA12), and polyolefin, such as polyethylene (PE) or polypropylene (PP).

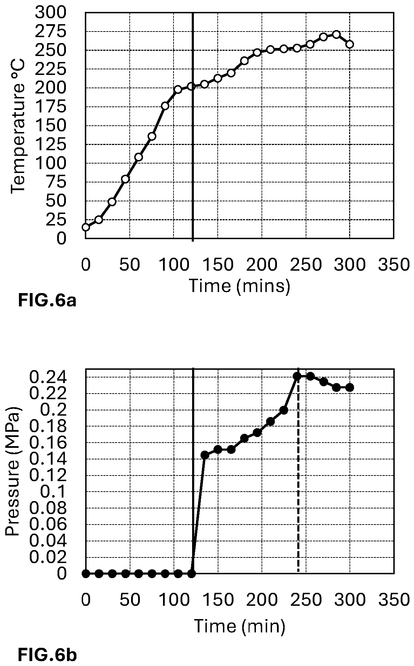

Pressure is applied by extruding the thermoplastic polymer waste material (3m) into the cavity until the cavity is filled to form the outer tubular layer (3) and, at a same time, to build up a pressure in the cavity to drive the impregnation of the glass fibres by the molten thermoplastic matrix (2m) and consolidation of the precursor (2p) plies. As shown in Figures 4d and 5c, the polymer waste material (3m) extruded into the cavity is preferably admixed with chopped glass fibres, to increase the mechanical properties of the outer tubular layer (3). Figure 6a shows the temperature measured within the precursor (2p) as a function of time in an embodiment wherein the mould is placed into an oven and Figure 6b shows the pressure measured at the head of the extruder (15) as a function of the same time scale as in Figure 6a. The solid vertical line indicates the time extrusion of the polymer waste material (3m) starts after 120 min residence time of the mould in the oven. The pressure in the cavity preferably reaches at least 1 bar, preferably at least 1.5 bar, preferably at least 2.0 bar, more preferably at least 2.5 bar, more preferably at least 3 bar above atmospheric. In the example, the pressure builds up as the cavity is being filled and reaches 2.4 bar when it is filled as the temperature is above 250°C (cf. vertical dashed line in Figure 6b), which is sufficient to drive the impregnation of the glass fibres in the precursor (2p) by the thermoplastic polymer matrix (2m). This is an original and advantageous technique since, with a single operation of extruding the thermoplastic waste material (3m) into the cavity, three functions are fulfilled quasi-simultaneously: (A) applying the outer layer (3) in intimate contact with and strong adhesion to the inner layer (2), (B) applying the pressure required to drive the impregnation of the glass fibres and the consolidation of the precursor (2p) plies, and (C) maintaining a high temperature inside the mould and inside the inner tubular layer (2) during the impregnation and consolidation processes.

The inner and outer moulds (12, 13) and thermoplastic materials (2m, 3m) contained in the mould are then cooled below a solidification temperature of both thermoplastic polymer matrix (2m) and thermoplastic polymer waste material (3m) to solidify (crystallise) them. This can be done by blowing a fluid (e.g., air) onto the outer mould (13) as shown in Figures 4e and 5d and through the inner mould (12) or flowing a cold liquid into the mould, e.g., through the same fluid jacket and inner serpentine used to heat the mould.

### Demoulding of the composite pole (1)

Once the thermoplastic material (2m, 3m) is solidified (crystalised), the thus formed composite pole can be demoulded, by removing the composite pole from both inner and outer moulds (12, 13). A first step consists of removing the mandrel forming the inner mould (12) from inside the composite pole (1). This is advantageously performed before the outer mould is removed, as the latter can be used as a fixed support upon which to push the inner mould out of the bore (4) of the composite pole (1). This is illustrated in Figures 4e & 4f and 5d & 5e, wherein a pusher (17) comprising a pushing arm is fixed to the top end (i.e., the end of smallest hydraulic diameter (D3t)), with the pushing arm of the pusher (17) resting on the top end of the mandrel forming the inner mould (12). The inner mould (12) can be pushed out of the bore (4) of the composite pole as follows. The pusher (17) can be a hydraulic or pneumatic cylinder, whose pushing arm is a piston. The pusher can also be provided with a screwing arm which can be extended or retrieved by rotation thereof in a thread driven by a motor (not shown).

A top cap (13t) of the outer mould is removed to open a top end of the inner mould (12) and expose the top end of the mandrel forming the inner mould (2). Similarly, a partial bottom cap (12b) of the outer mould (13) is removed to form a partial opening at a bottom end of the outer mould (13) at a level of the bottom end of the composite pole (1). The partial opening has a hydraulic diameter larger than a bottom bore hydraulic diameter (D4b) of the bore (4) and smaller than the bottom outer hydraulic diameter (D3b) and is configured to allow free passage of the mandrel forming the inner mould (12) through the partial opening but retaining the composite pole within the outer mould (13). As shown in Figures 4f and 5e, the inner mould (12) is pushed at the level of the top end thereof out of the bore (4) by extending the pushing arm of the pusher (17) against the top end of the mandrel. The mandrel forming the inner mould (12) can thus be retrieved through the partial opening at the bottom end of the outer mould (13) to expose the bore (4) of the composite pole (1).

The composite pole can be removed from the outer mould (13). In case of the outer mould (13) is formed of separatable shells, it suffices to separate the shells as shown in Figure 5f, to open the outer mould (13) and allow easy extraction of the thus formed composite pole (1) shown in Figure 5g. In case the outer mould (13) is in the form of a monolithic hollow tube, the composite pole can be extracted by fully opening the outer mould (13) at the level of the bottom end of the composite pole (1) by removing a bottom cap (13b) to expose the bottom end of the composite pole (1), and pushing the top end of the composite pole (1) with the pusher to push the composite pole (1) out of the outer mould (1), as shown in Figures 4g to 4i. A different head of larger dimensions can be coupled to the free end of the pusher's arm to press on the cross-section of the top end of the pole (1).

In a preferred embodiment, an anti-adhesion sheet of low surface energy material having a melting temperature higher than the process temperature, preferably a fluorinated polymer or siliconized material is wrapped around the mandrel forming the inner mould (12) prior to applying the first ply of precursor (2p), to facilitate the pushing of the inner mould (12) out of the bore (4) of the composite pole (1).

The composite pole of the present invention is advantageous as it provides a solution for producing poles in large volumes in replacement of wood poles and, at the same time, allows using large volumes of thermoplastic waste material which would normally be incinerated or dumped in a landfill or, worse, in the oceans. The generally discarded properties of the thermoplastic waste material (3m) are herein valorised, as the outer tubular layer (3) gives the composite pole complementary and essential properties to those conferred by the advanced composite inner tubular layer (2).

| **#** | **Feature** |
|---|---|
| 1 | Composite pole |
| 2 | Inner tubular layer |
| 2g0 | UD continuous GF ply at 0° |
| 2g45 | UD continuous GF ply at ±45° |
| 2g90 | UD continuous GF ply at 90° |
| 2m | Thermoplastic matrix |
| 2mf | Thermoplastic film |
| 2p | Inner tubular layer precursor |
| 2p0 | UD prepreg at 0° |
| 2p45 | UD prepreg at ±45° |
| 2p90 | UD prepreg at 90° |
| 2t0 | UD towpreg fabric at 0° |
| 2t90 | UD towpreg fabric at 90° |
| 2tw | Woven and / or stitched towpreg fabric |
| 3 | Outer tubular layer |
| 3g | Chopped glass fibres |
| 3m | Thermoplastic polymer waste material |
| 4 | Bore |
| 12 | Inner mould |
| 12b | Partial bottom cap |
| 13 | Outer mould |
| 13b | Bottom cap |
| 13i | Injection coupling |
| 13t | Top cap |
| 15 | Extruder |
| 17 | Pusher |
| 22-0 | Layer of matrix- GF at 0° |
| 22-45 | Layer of matrix - GF ±45° |
| 22-90 | Layer of matrix - GF at 90° |
| D2b | Hydraulic diameter of the inner tubular layer at top end |
| D2t | Hydraulic diameter of the outer tubular layer at top end |
| D3b | Hydraulic diameter of the inner tubular layer at bottom end |
| D3t | Hydraulic diameter of the outer tubular layer at bottom end |
| L | Length of the composite pole |
| t1 | Total wall thickness = t2 + t3 |
| t2 | Thickness of the inner tubular layer |
| t3 | Thickness of the outer tubular layer |

## Claims

1. A composite pole (1) for structural applications including holding commodities along streets, roads and across countryside wherein the composite pole (1) defines a tubular structure comprising a bore (4) and extends from a bottom end of bottom outer hydraulic diameter (D3b) to a top end of top hydraulic outer diameter (D3t) over a length L measured along a Z-axis, wherein
• a length (L) of the composite pole is comprised between 3.0 m and 20.0 m, preferably between 5.0 m and 15.0 m,
• an aspect ratio of the length (L) to the bottom hydraulic diameter (D3b) is comprised between 30 and 40, preferably between 35 and 38 (i.e., L / D3b = 30 to 40, preferably 35 to 38), and
• a ratio of the top hydraulic diameter (D3t) to the bottom hydraulic diameter (D3b) is comprised between 0.5 and 1.0, preferably between 0.7 and 0.9 (i.e., D3t / D3b = 0.5 to 1.0, preferably, 0.7 to 0.9),
**Characterized in that,** the composite pole is formed by a wall of total thickness (t1) comprising an inner tubular layer (2) and an outer tubular layer (3), wherein
• the inner tubular layer (2) defines the bore (4), has an inner thickness (t2), and is made of a thermoplastic polymer matrix (2m) reinforced by continuous glass fibres including at least 50 wt.%, preferably at least 70 wt.% of the total weight of the continuous glass fibres aligned at 0° along the Z-axis, and
• the outer tubular layer (3) is applied directly over the inner tubular layer (2), defines an outer surface of the composite pole (1), has an outer thickness (t3), and is made of thermoplastic polymer waste material (3m) preferably admixed with chopped glass fibres,
**in that,** the outer thickness (t3) is comprised between 65 and 85%, preferably 70 to 80% of the total thickness (t1) (i.e., t3 / t1 = 65 to 85%, preferably 70 to 80%), wherein t1 = t2 + t3, and
and **in that,** a ratio of the total thickness (t1) to the bottom hydraulic diameter (D3b) is comprised between 8 and 15%, preferably between 10 and 13%,
wherein the hydraulic diameter (Dh) of a closed geometric shape is a ratio of four times an area (A) to a perimeter (P) of the area of the shape (i.e., Dh = 4 A / P),

2. Composite pole (1) according to claim 1, wherein the thermoplastic polymer matrix (2m) of the inner tubular layer (2) is selected among, polyethylene terephthalate (PET), polyethylene terephthalate glycol (PETG), polyamide (PA), including polyamide 6, 66, 12 (PA6, PA66, PA12), and polyolefin, preferably polyethylene (PE) and polypropylene (PP).

3. Composite pole (1) according to claim 1 or 2, wherein the inner tubular layer (2) comprises at least 50 wt.% glass fibres over the total weight of the inner tubular layer, preferably at least 55 wt.%.

4. Composite pole (1) according to any one of the preceding claims, wherein at least 5 wt.%, preferably at least 10 wt.%, more preferably at least 20 wt.% of the glass fibres of the inner tubular layer (2) are oriented at ±45° with respect to the Z-axis.

5. Composite pole (1) according to any one of the preceding claims, wherein the thermoplastic polymer waste material (3m) of the outer tubular layer (3) comprises at least 70 wt.% of polyolefins of different grades, including different grades of polyethylene and of polypropylene, and is preferably admixed with chopped glass fibres of length comprised between 2.0 mm and 6.0 mm, preferably between 3.0 and 4.0 mm, and in an amount comprised between 10 and 20 wt.%, preferably between 12 and 16 wt.% relative to the total weight of the outer tubular layer (3).

6. Process for producing a composite pole according to any one of the preceding claims, comprising the following steps,
• providing an inner mould (12) defining a geometry of the bore (4),
• providing an outer mould (13) defining a geometry of an outer surface of the wall,
• applying a precursor (2p) of the inner tubular layer by wrapping around the inner mould (12) either,
∘ A succession of unidirectional continuous glass fibre plies (2g0, 2g45) and foils of thermoplastic polymer matrix (2m) configured to form the inner tubular layer (2) upon application of heat to melt the foils of thermoplastic polymer matrix (2m) and pressure to drive an impregnation of the continuous glass fibre plies, or
∘ a succession of prepregs formed by continuous glass fibre plies preimpregnated by the thermoplastic polymer matrix (2m) and configured to form the inner tubular layer (2) upon application of heat to melt the thermoplastic polymer matrix (2m) and pressure to drive an consolidation of the prepregs,
• Inserting the inner mould (12) with the precursor into the outer mould (13),
• connecting an extruder to one end of the outer mould, facing a cavity defined between the outer mould and the precursor,
• heating the inner and outer moulds (12, 13) to a process temperature configured to melt the thermoplastic polymer matrix,
• extruding the thermoplastic polymer waste material, preferably admixed with chopped glass fibres, into the cavity until the cavity is filled, to form the outer tubular layer (3) and, at a same time, raise a pressure in the cavity to drive the impregnation or consolidation of the continuous glass fibre plies by the molten thermoplastic matrix,
• cooling the inner and outer moulds (12, 13) to below a solidification temperature of both thermoplastic polymer matrix and thermoplastic polymer waste material,
• demould the thus formed composite pole, by removing the composite pole from both inner and outer moulds (12, 13).

7. Process according to claim 6, wherein the inner mould (12) is pushed out of the bore (4) of the composite pole by,
• removing a top cap of the outer mould to open a top end of the inner mould (12) to expose the top end of the composite pole (1),
• removing a bottom cap of the outer mould to form a partial opening at a bottom end of the outer mould (13) at a level of the bottom end of the composite pole (1), wherein the partial opening has a hydraulic diameter comprised between a bottom bore hydraulic diameter (D4b) and the bottom outer hydraulic diameter (D3b) and is configured to allow free passage of the inner mould through the partial opening, but retaining the composite pole within the outer mould (13),
• pushing the top end of the inner mould (12) out of the bore (4) with a pusher (17),
• removing composite pole from the outer mould (13) either,
∘ by fully opening the outer mould (13) at the level of the bottom end of the composite pole (1) to expose the bottom end of the composite pole (1), and pushing the top end of the composite pole (1) with the pusher to push the composite pole (1) out of the outer mould, or
∘ by opening the outer mould, to expose the composite pole and allow removal thereof.

8. Process according to claim 7, wherein an anti-adhesion sheet of low surface energy material having a melting temperature higher than the process temperature, preferably a fluorinated polymer material is wrapped around the inner mould (12) prior to applying the first continuous glass fibre ply or prepreg, to facilitate pushing the inner mould (12) out of the bore (4) of the composite pole (1).

9. Process according to any one of claims 6 to 8, wherein the pressure in the cavity rises to at least 1 bar, preferably at least 2.5 bar, more preferably at least 3 bar.
